(19)

**Europäisches Patentamt**
**European Patent Office**
**Office européen des brevets**

(11) **EP 4 664 589 A1**

(12) **EUROPEAN PATENT APPLICATION**
published in accordance with Art. 153(4) EPC

(43) Date of publication:
**17.12.2025 Bulletin 2025/51**

(21) Application number: **23921321.8**

(22) Date of filing: **29.11.2023**

(51) International Patent Classification (IPC):
$H01M\ 10/056^{(2010.01)}$    $C01G\ 25/02^{(2006.01)}$
$C01G\ 35/00^{(2006.01)}$    $H01B\ 1/06^{(2006.01)}$
$H01B\ 1/08^{(2006.01)}$    $H01M\ 4/13^{(2010.01)}$
$H01M\ 4/66^{(2006.01)}$    $H01M\ 10/052^{(2010.01)}$
$H01M\ 50/434^{(2021.01)}$    $H01M\ 50/443^{(2021.01)}$
$H01M\ 50/451^{(2021.01)}$

(52) Cooperative Patent Classification (CPC):
**C01G 25/02; C01G 35/00; H01B 1/06; H01B 1/08; H01M 4/13; H01M 4/66; H01M 10/052; H01M 10/056; H01M 50/434; H01M 50/443; H01M 50/451;** Y02E 60/10

(86) International application number:
**PCT/JP2023/042637**

(87) International publication number:
**WO 2024/166501 (15.08.2024 Gazette 2024/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.02.2023 JP 2023018908**

(71) Applicant: **Niterra Co., Ltd.**
**Nagoya-shi, Aichi 461-0005 (JP)**

(72) Inventors:
• **TAKEUCHI, Yuki**
**Nagoya-shi, Aichi 461-0005 (JP)**

• **KANEKO, Masahide**
**Nagoya-shi, Aichi 461-0005 (JP)**
• **OTANI, Kazushi**
**Nagoya-shi, Aichi 461-0005 (JP)**
• **SHISHIHARA, Daisuke**
**Nagoya-shi, Aichi 461-0005 (JP)**
• **HIKOSAKA, Hideaki**
**Nagoya-shi, Aichi 461-0005 (JP)**
• **MATSUOKA, Takayuki**
**Nagoya-shi, Aichi 461-0005 (JP)**

(74) Representative: **Zimmermann & Partner**
**Patentanwälte mbB**
**P.O. Box 330 920**
**80069 München (DE)**

(54) **AGGREGATES, SHEET, SEPARATOR, ELECTRODE AND POWER STORAGE DEVICE**

(57)   To provide an assembly composite, a sheet, a separator and an electrode in which dendritic growth of metallic Li is suppressed, and a power storage device. The assembly composite (10) which contains oxide grains (19) having a garnet-type crystal structure (22) containing Li, La, and Zr, and inorganic grains composed of a main-group element including Mg. The median diameter of the inorganic grains is 1/2 or less the median diameter of the oxide grains. The volume ratio of the inorganic grains to the oxide grains is 1 vol% or more and 10 vol% or less. The power storage device (11) includes the assembly composite.

**EP 4 664 589 A1**

*FIG. 2*

**Description**

TECHNICAL FIELD

The present invention relates to an assembly composite, a sheet, a separator and an electrode containing oxide grains having a garnet-type crystal structure, and to a power storage device.

BACKGROUND ART

As an oxide having a garnet-type crystal structure containing Li, Zr, and La, Patent Literature 1 discloses an oxide containing Li, La, and Zr, and at least one of Mg, and A (A is at least one element selected from the group consisting of Ca, Sr, and Ba). Such an oxide is known to be stable to metallic Li and is a promising candidate for a solid electrolyte material for a power storage device.

CITATION LIST

PATENT LITERATURE

Patent Literature 1: JP2016-40767A

SUMMARY OF INVENTION

TECHNICAL PROBLEM

In charging a power storage device, in some cases, growth of metallic Li dendrites may occur in a direction from a negative electrode to a positive electrode. Contact of metallic Li dendrites with a positive electrode evokes short circuit. Particularly when oxide grains are employed as a material of a power storage device, dendrites are grown through the grain boundary, readily resulting in short circuit.

The present invention has been conceived to solve the above problem, and an object of the invention is to provide an assembly composite in which dendritic growth of metallic Li is suppressed. Another object is to provide a power storage device.

SOLUTION TO PROBLEM

A first aspect for attaining the objects is an assembly composite which contains oxide grains having a garnet-type crystal structure containing Li, La, and Zr, and inorganic grains composed of a main-group element including Mg. The median diameter of the inorganic grains is 1/2 or less the median diameter of the oxide grains, and a volume ratio of the inorganic grains to the oxide grains is 1 vol% or more and 10 vol% or less..

A second aspect includes an electrolytic solution in addition to the first aspect

A third aspect is a sheet and includes the assembly composite of the first or second aspect.

A fourth aspect is an electrode and includes the assembly composite of the first or second aspect, or the electrode is in contact with a protective layer including the assembly composite of the first or second aspect.

A fifth aspect is a separator and includes the assembly composite of the first or second aspect, or the separator is in contact with a protective layer including the assembly composite of the first or second aspect.

A sixth aspect is a power storage device and includes the assembly composite of the fourth aspect, or the power storage device includes the separator of the fifth aspect.

ADVANTAGEOUS EFFECTS OF INVENTION

According to the assembly composite of the present invention, inorganic grains composed of main-group elements including Mg are present in the intergranular space of the oxide grains. Since the inorganic grains composed of main-group elements including Mg are a nonconductor, the presence of the inorganic grains in the intergranular space of the oxide grains enables of suppressing dendritic growth of metallic Li at the grain boundary. According to the sheet, the separator, the electrode or the power storage device of the present invention, the dendritic growth can be suppressed as the assembly composite is included.

BRIEF DESCRIPTION OF DRAWINGS

FIG. 1 shows a cross-section of a power storage device of a first embodiment including an assembly composite.
FIG. 2 shows an enlarged cross-sectional view of an area II marked in FIG. 1.
FIG. 3 shows a schematic view of garnet-type crystal structure.
FIG. 4 shows a cross-section of a power storage device of a second embodiment including an assembly composite.
FIG. 5 shows a cross-section of a power storage device of a third embodiment including an assembly composite.
FIG. 6(a) is a cross-section of an insulator of a fourth embodiment, FIG. 6(b) is a cross-section of an electrode of a fifth embodiment, and FIG. 6(c) is a cross-section of an electrode of a sixth embodiment.

DESCRIPTION OF EMBODIMENTS

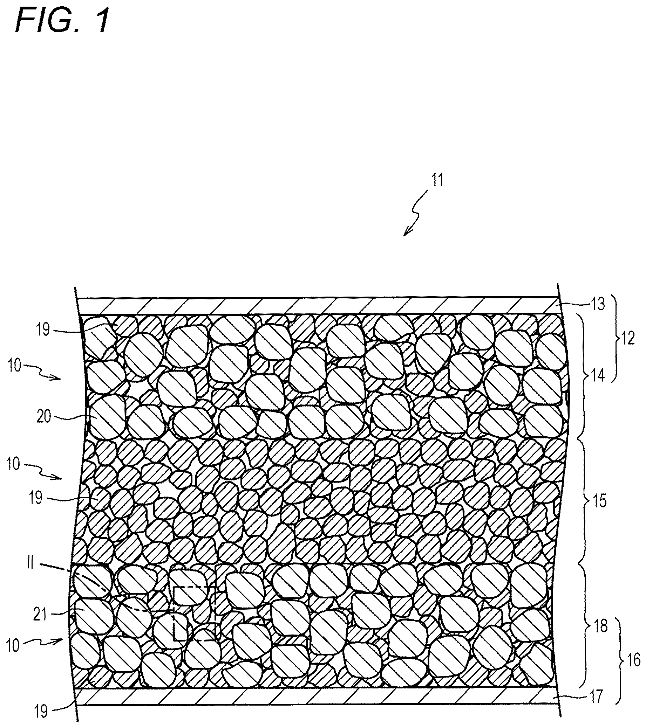

Hereinafter, a preferred embodiment of the present invention will be described with reference to attached drawings. FIG. 1 is a schematic cross-section of a power storage device 11 according to a first embodiment including an assembly composite 10. The power storage device 11 corresponds to a primary battery or a secondary battery containing lithium ions as a carrier. The power storage device 11 according to the present embodiment is a lithium ion solid battery (i.e., a secondary battery) in which power generating elements are formed of a solid material. The expression "a power generating element is formed of a solid material" refers to a case in which a main body of the power generating element is formed of a solid material, and also encompasses an embodiment in which the main body has been impregnated with liquid.

The power storage device 11 includes, from top to bottom, a positive electrode layer 12, an electrolyte layer 15, and a negative electrode layer 16. The positive electrode layer 12, the electrolyte layer 15, and the negative electrode layer 16 are all in the sheet form. The positive electrode layer 12, the electrolyte layer 15, and the negative electrode layer 16 are built in a case (not illustrated). The electrolyte layer 15 is formed of the assembly composite 10, and the assembly composite 10 contains oxide grains 19. The electrolyte layer 15 of the present embodiment corresponds to a separator. The separator isolates the positive electrode layer 12 from the negative electrode layer 16, and provides electrical insulation therebetween.

The positive electrode layer 12 includes a current-collecting layer 13 and a active material layer 14 stacked thereon. The current-collecting layer 13 is a member having an electrical conductivity. Examples of the material of the current-collecting layer 13 include metals selected from among Ni, Ti, Fe, and Al; alloys each containing two or more of such metals; stainless steel; and carbon material.

The active material layer 14 contains the assembly composite 10 and an active material 20. For lowering the resistance of the active material layer 14, the active material layer 14 may contain a conducting aid. Examples of the conducting aid include carbon black, acetylene black, Ketjen black, carbon fiber, Ni, Pt, and Ag.

Examples of the active material 20 include a metal oxide in which the metal includes a transition metal, a sulfur-containing active material, and an organic active material. Examples of the metal oxide in which the metal includes a transition metal include a metal oxide in which the metal includes Li and at least one element selected from among Mn, Co, Ni, Fe, Cr, and V. Specific examples of the metal oxide in which the metal includes a transition metal include $LiCoO_2$, $LiNi_{0.8}Co_{0.15}Al_{0.05}O_2$, $LiMn_2O_4$, $LiNiVO_4$, $LiNi_{0.5}Mn_{1.5}O_4$, $LiNi_{1/3}Mn_{1/3}Co_{1/3}O_2$, and $LiFePO_4$.

In order to suppress reaction between the active material 20 and the oxide grains 19, a coating layer may be provided on the active material 20. Examples of the coating layer include $Al_2O_3$, $ZrO_2$, $LiNbO_3$, $Li_4Ti_5O_{12}$, $LiTaO_3$, $LiNbO_3$, $LiAlO_2$, $Li_2ZrO_3$, $Li_2WO_4$, $Li_2TiO_3$, $Li_2B_4O_7$, $Li_3PO_4$, and $Li_2MoO_4$.

Examples of the sulfur-containing active material include S, $TiS_2$, NiS, $FeS_2$, $Li_2S$, $MoS_3$, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoxydimethane; and phenazine oxide.

The negative electrode layer 16 includes a current-collecting layer 17 and a active material layer 18 stacked thereon. The current-collecting layer 17 is a member having an electrical conductivity. Examples of the material of the current-collecting layer 17 include metals selected from among Ni, Ti, Fe, Cu, and Si; alloys each containing two or more of such metals; stainless steel; and carbon material.

The active material layer 18 contains the assembly composite 10 and an active material 21. For lowering the resistance of the active material layer 18, the active material layer 18 may contain a conducting aid. Examples of the conducting aid include carbon black, acetylene black, Ketjen black, carbon fiber, Ni, Pt, and Ag. Examples of the active material 21 include Li, Li-Al alloy, $Li_4Ti_5O_{12}$, graphite, In, Si, Si-Li alloy, and $SiO_X$ (e.g., $0.5<X<1.5$). The effect exerted by the assembly composite 10 is significant, when the active material 21 contains metallic lithium.

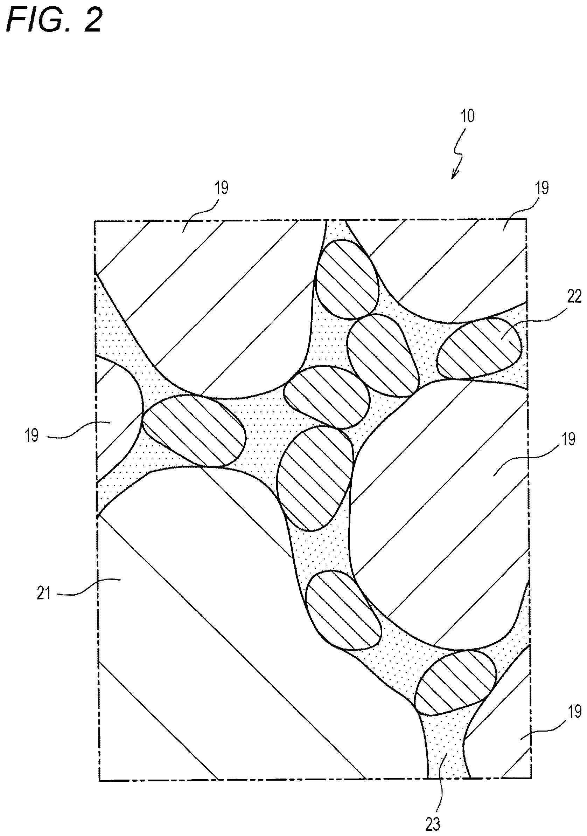

FIG. 2 is a cross-sectional view of the assembly composite 10. FIG. 2 schematically shows an enlarged cross-sectional view of an area II marked in FIG. 1. The assembly composite 10 contains the oxide grains 19, the inorganic grains 22, and an electrolytic solution 23. The oxide grains 19 are composed of a complex oxide having a garnet-type crystal structure containing Li, La, and Zr. The garnet-type crystal structure is represented by a general formula $C_3A_2B_3O_{12}$.

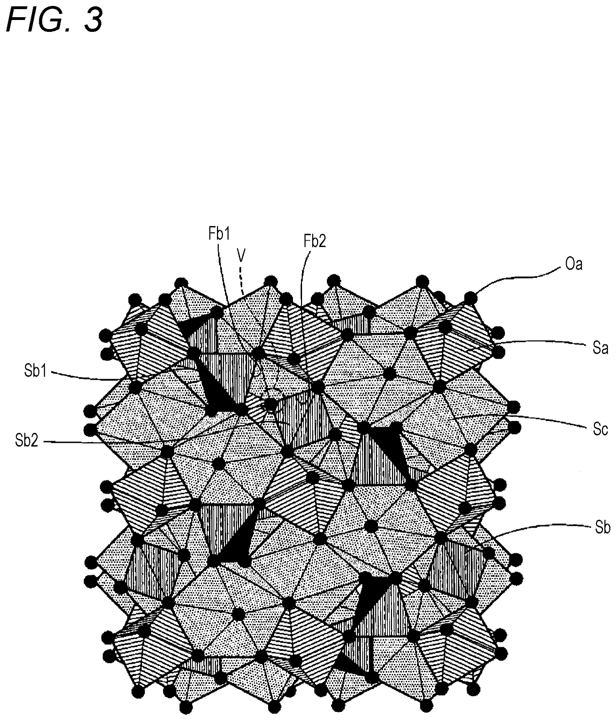

FIG. 3 is a schematic view of a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The oxide grains 19 generally have a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, in which Fb1 forms the B site (Sb1), and Fb2 forms the B site (Sb2). In one possible case, in $Li_7La_3Zr_2O_{12}$ having a garnet-type crystal structure, La is present in the C sites (Sc); Zr in the A sites (Sa), and Li in the B sites (Sb) and the vacancy (V).

The garnet-type crystal structure may be determined through X-ray diffraction. The garnet-type crystal structure exhibits an XRD pattern similar to that of an X-ray diffraction file No. 422259 ($Li_7La_3Zr_2O_{12}$) of CSD (Cambridge Structural Database). As compared with No. 422259, the oxide grains 19 may have differences in the type of elements forming oxide, the Li concentration, and the like. Therefore, diffraction angle and intensity ratio may vary. A typical crystal in relation to the above is a cubic system (space group: Ia-3d ("-" is an over-line representing rotary inversion), JCPDS:84-1753).

With reference again to FIG. 2, a further description will be added. A typical example of the material of the oxide grains 19 is $Li_7La_3Zr_2O_{12}$. In the oxide grains 19, a part of the elements forming $Li_7La_3Zr_2O_{12}$ may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthaoids (except for La).

Examples of the material of the oxide grains 19 include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

Particularly, the oxide grains 19 preferably contain at least one of Mg and element A (A represents at least one element selected from the group consisting of Ca, Sr, and Ba), and satisfies all the following conditions (1) to (3) regarding mole proportions of the elements. Alternatively, the oxide grains 19 preferably contain both Mg and element A, and satisfy all the following conditions (4) to (6) regarding mole proportions of the elements. From the viewpoint of elevating the ion conductivity of the oxide grains 19, element A is preferably Sr.

(1)

$$1.33 \leq Li/(La+A) \leq 3$$

(2)

$$0 \leq Mg/(La+A) \leq 0.5$$

(3)

$$0 \leq A/(La+A) \leq 0.67$$

(4)

$$2.0 \leq Li/(La+A) \leq 2.6$$

(5)

$$0.01 \leq Mg/(La+A) \leq 0.14$$

(6)

$$0.04 \leq A/(La+A) \leq 0.17$$

The inorganic grains 22 are composed of main-group elements including Mg. The term "main-group element" refer to elements belonging to groups 1, 2, and 12 to 18 in the periodic table on the basis of the IUPAC Recommendation 1990. Examples of the material of the inorganic grains 22 include $MgO$, $Mg_2SiO_4$, $Mg_2Si_2O_6$, $Mg_2Si_3O_8$, $MgAl_2O_4$, $Mg_2Si$, $Mg_3(PO_4)_2$, $MgN_2$, $MgB_2$, $MgF_2$, $MgI_2$, Li-Mg-O, and Li-Mg-Al-O. The inorganic grains 22 composed of main-group elements including Mg are a nonconductor. Thus, even when the oxide grains 19 which have come into contact with metallic Li having strong reducing power have been provided with electron conductivity, the inorganic grains 22 can be present in the intergranular space of the oxide grains 19, thereby suppressing dendritic growth of Li at the grain boundary of the oxide grains 19. As a result, occurrence of short circuit of the electrolyte layer 15 can be suppressed.

In the assembly composite 10, the volume ratio of the inorganic grains 22 to the oxide grains 19 is preferably 1 vol% or higher and 10 vol% or lower. The tuning of the volume ratio is based on preventing an excessive increase in resistance of the power storage device 11 including inorganic grains 22, while suppressing dendritic growth of metallic Li by the presence of the inorganic grains 22.

The relative volume (%) of the inorganic grains 22 is determined through the following procedure. Firstly, a cross-section (i.e., a polished surface, a surface obtained through irradiation with a focused ion beam (FIB), or a surface obtained through ion milling) of the active material layer 14 or 18 or the electrolyte layer 15 is analyzed under a scanning electron microscope (SEM) equipped with an energy dispersive X-ray spectrometer (EDS), to thereby identify the oxide grains 19 and the inorganic grains 22. The polished surface is obtained by, for example, freezing the active material layer 14 or 18 or the electrolyte layer 15, or embedding the active material layer 14 or 18 or the electrolyte layer 15 in a 4-functional epoxy resin or the like to solidify, followed by polishing. In the analysis, the area attributed to the oxide grains 19 and that attributed to the inorganic grains 22 are determined by, for example, determining the distribution of La, Zr, and Mg in the cross-section, or conducting image analysis of the contrast in a backscattered electron image. The ratio of the area of the inorganic grains 22 to that of the oxide grains 19 is considered as the corresponding volume ratio.

The median diameter of the inorganic grains 22 is preferably smaller than that of the oxide grains 19, for the purpose of locating the inorganic grains 22 selectively on the surface of the oxide grains 19 and in the intergranular space of the oxide grains 19 where dendritic growth of metallic Li possibly occurs. Particularly, the median diameter of the inorganic grains 22 is 1/2 or less the median diameter of the oxide grains 19, more preferably, the median diameter of the inorganic grains 22 is 1/5 or less the median diameter of the oxide grains 19.

The median diameter of the oxide grains 19 and that of the inorganic grains 22 are determined through the following procedure. Firstly, an SEM image including the oxide grains 19 and the inorganic grains 22 emerged in a cross-section of the active material layer 14 or 18 or the electrolyte layer 15 is analyzed, to thereby determine the areas corresponding to the oxide grains 19 and the inorganic grains 22, respectively. The relevant circle-equivalent diameter is calculated from the determined area, and a volume-based grain size distribution is determined. The median diameter is a 50% cumulative circle-equivalent diameter in the grain size distribution. In order to secure precision, the image from which grain size distribution is obtained has an area of 400 $\mu m^2$ or wider in the cross-section.

In the case where the oxide grains 19 and the inorganic grains 22 are in a flow state (i.e., a powder state before receiving tape molding, press molding, or the like), the median diameter of the oxide grains 19 and that of the inorganic grains 22 are determined through grain size distribution measurement based on the laser diffraction/scattering method.

The electrolytic solution 23 is a solution of a lithium salt dissolved in a solvent. No particular limitation is imposed on the solvent, so long as the solvent can dissolve the lithium salt. Examples of the solvent include a carbonate ester, an aliphatic carboxylate ester, a phosphate ester, a $\gamma$-lactone, an ether, a nitrile, sulfolane, dimethylsulfoxide, a fluorous solvent, and an ionic liquid. A mixture thereof may also be used.

Examples of the carbonate ester include cyclic carbonate esters such as propylene carbonate, ethylene carbonate, butylene carbonate, vinylene carbonate, vinylethylene carbonate, and fluoroethylene carbonate; and chain carbonate esters such as dimethyl carbonate, diethyl carbonate, and ethyl methyl carbonate.

Examples of the aliphatic carboxylate ester include methyl formate, methyl acetate, and ethyl propionate. Examples of the phosphate ester include trimethyl phosphate. Examples of the $\gamma$-lactone include $\gamma$-butyrolactone. Examples of the ether include chain ethers such as 1,2-dialkoxyethane; and cyclic ethers such as 1,3-dioxolane, tetrahydrofuran, and 2-methyltetrahydrofuran. Examples of the nitrile include acetonitrile and propionitrile. The fluorous solvent encompasses a compound derived from a hydrocarbon by substituting a hydrogen atom by a fluorine atom, and a derivative of the compound.

An ionic liquid is a compound formed of a cation and an anion and assumes liquid at ambient temperature and normal pressure. When the solvent of the electrolytic solution is an ionic liquid, inflammability of the electrolytic solution can be enhanced. Preferably, the ionic liquid is one or more cation species selected from the group consisting of ammonium, imidazolium, pyrrolidinium, and piperidinium.

No particular limitation is imposed on the anion moiety of the ionic liquid. Examples of the anion moiety include inorganic anions such as $BF_4^-$ and $N(SO_2F)_2^-$; and organic anions such as $B(C_6H_5)_4^-$, $CH_3SO_3^-$, $CF_3SO_3^-$, $N(SO_2CF_3)_2^-$, and $N(SO_2C_4F_9)_2^-$. In some cases, $N(SO_2F)_2^-$ may be abbreviated as referred to as $[FSI]^-$ (i.e., bis(fluorosulfonyl)imide anion) and $N(SO_2CF_3)_2^-$ may be abbreviated as $[TFSI]^-$ (i.e., bis(trifluoromethanesulfonyl)imide anion).

Examples of the ionic liquid include N,N-diethyl-N-methyl-N-(2-methoxyethyl)ammonium bis(fluorosulfonyl) imide (DEME-FSI), N,N-diethyl-N-methyl-N-(2-methoxyethyl)ammonium bis(trifluoromethanesulfonyl)imide (DEME-TFSI), 1-ethyl-3-methylimidazolium bis(fluorosulfonyl)imide (EMI-FSI), 1-ethyl-3-methylimidazolium bis(trifluoromethanesulfonyl)imide (EMI-TFSI), N-butyl-N-methylpiperidinium bis(fluorosulfonyl)imide, N-methyl-N-propylpiperidinium bis(trifluoromethanesulfonyl)imide, N-methyl-N-propylpyrrolidinium bis(fluorosulfonyl)imide (P13-FSI), and N-methyl-N-propylpyrrolidinium bis(trifluoromethanesulfonyl)imide (P13-TFSI). A mixture thereof may also be employed.

The ionic liquid may be a solvated ionic liquid. Examples of the solvated ionic liquid include a solution prepared by dissolving a lithium salt in a sulfone-type solvent (e.g., sulfolane or a sulfolane derivative) or a glyme-type solvent (e.g., tetraglyme).

The lithium salt is a compound which is employed for establishing transfer of cations between the positive electrode layer 12 and the negative electrode layer 16. Examples of the anion moiety of the lithium salt include halide ions (e.g., $I^-$, $Cl^-$, and $Br^-$), $SCN^-$, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, $B(O_2C_2O_2)_2^-$, and $RCOO^-$ (R represents a C1 to C4 alkyl group, a phenyl group, or a naphthyl group). The lithium salt may also be a mixture of these salts.

The assembly composite 10 has a ratio of the volume of the oxide grains 19 to the total volume of the oxide grains 19 and the electrolytic solution 23 of 52% or higher and lower than 100%, preferably 61% or higher and lower than 100%. Since the combination of the oxide grains 19 with the electrolytic solution 23 can reduce the interfacial resistance among the oxide grains 19, the ion transport number of the assembly composite 10 can be enhanced, as compared with that of a conventional electrolytic solution. As a result, operational stability of the power storage device 11 employing the assembly composite 10 increases.

The oxide grain 19 content (vol%) is determined through analysis of a vision field (×5,000) selected at random from cross-sections of the active material layer 14 or 18 or the electrolyte layer 15 under an SEM equipped with an EDS. In the analysis, the area attributed to the oxide grains 19 and that attributed to the electrolytic solution 23 are determined by, for example, determining the distribution of La, Zr, and Mg in the cross-section, or performing image analysis of the contrast in a backscattered electron image. The ratio of the area of the oxide grains 19 to the sum of the area of the oxide grains 19 and that of the electrolytic solution 23 is considered as the corresponding volume ratio.

The lithium salt concentration of the electrolytic solution 23 is 0.2 mol/dm$^3$ or higher, preferably 0.5 mol/dm$^3$ or higher. As the salt concentration increases, the number of solvent molecules coordinating to carrier ions increases, and the amount of non-coordinated solvent decreases. As a result, the interfacial resistance among the oxide grains 19 can be reduced. The salt concentration of the electrolytic solution 23 is preferably 4.0 mol/dm$^3$ or lower. When the salt concentration of the electrolytic solution 23 exceeds 4.0 mol/dm$^3$, a tendency that ion conductivity decreases by an increase in viscosity of the electrolytic solution 23 is considerable.

The assembly composite 10 may contain a binder for binding the oxide grains 19. Examples of the binder include a fluororesin, polyolefin, polyimide, polyvinylpyrrolidone, poly(vinyl alcohol), cellulose ether, and rubber polymer such as styrene-butadiene rubber. Examples of the fluororesin include vinylidene fluoride-based polymer, poly(chlorotrifluoroethylene), poly(vinyl fluoride), tetrafluoroethylene-perfluoroalkyl vinyl ether copolymer, tetrafluoroethylene-hexafluoropropylene copolymer, ethylene-tetrafluoroethylene copolymer, and ethylene-chlorotrifluoroethylene copolymer.

Examples of the vinylidene fluoride-based polymer include a vinylidene fluoride homoploymer and a copolymer of vinylidene fluoride and a copolymerizable monomer. Examples of the copolymerizable monomer include a halogen-containing monomer (except for vinylidene fluoride) and a non-halogen copolymerizable monomer. Examples of the halogen-containing monomer include chlorine-containing monomers such as vinyl chloride; and fluorine-containing monomers such as trifluoroethylene, tetrafluoroethylene, chlorotrifluoroethylene, hexafluoropropylene, and perfluoroalkyl vinyl ether. Examples of the non-halogen copolymerizable monomer include olefins such as ethylene and propylene; acrylic monomers such as acrylic acid, methacrylic acid, an ester thereof, and a salt thereof; and vinyl monomers such as acrylonitrile, vinyl acetate, and styrene. Polymerization of one or more co-polymerizable monomers with vinylidene fluoride, to thereby form a copolymer of interest.

The power storage device 11 is fabricated through, for example, the following procedure. Specifically, electrolytic solution 23 is compounded with a mixture of the oxide grains 19 and the inorganic grains 22, and the compounded product is mixed with a solution in which a binder has been dissolved in a solvent, to thereby form a slurry. After the slurry is formed into a sheet form, a green sheet (electrolyte sheet) for providing the electrolyte layer 15 is formed by drying.

Separately, the electrolytic solution 23 is compounded with a mixture of the oxide grains 19 and the inorganic grains 22, and the compounded product is mixed with an active material 20 and further with a solution in which a binder has been dissolved in a solvent, to thereby form a slurry. After the slurry is applied on the current-collecting layer 13, a green sheet (positive electrode sheet) for providing the positive electrode layer 12 is formed by drying.

Yet separately, the electrolytic solution 23 is compounded with a mixture of the oxide grains 19 and the inorganic grains 22, and the compounded product is mixed with an active material 21 and further with a solution in which a binder has been dissolved in a solvent, to thereby form a slurry. After the slurry is applied on the current-collecting layer 17, a green sheet (negative electrode sheet) for providing the negative electrode layer 16 is formed by drying.

The electrolyte sheet, the positive electrode sheet, and the negative electrode sheet are cut into shapes of interest, respectively. The cut products thereof are stacked from the positive electrode sheet, the electrolyte sheet, and the negative electrode sheet in that order, and the stacked product is pressed to integrate the sheets. To each of the current-collecting layers 13 and 17, a terminal (not illustrated) is connected, and the product is built in a case (not illustrated), and the case is closed. Thus, the power storage device 11 including the positive electrode layer 12, the electrolyte layer 15, and the negative electrode layer 16 in that order can be fabricated.

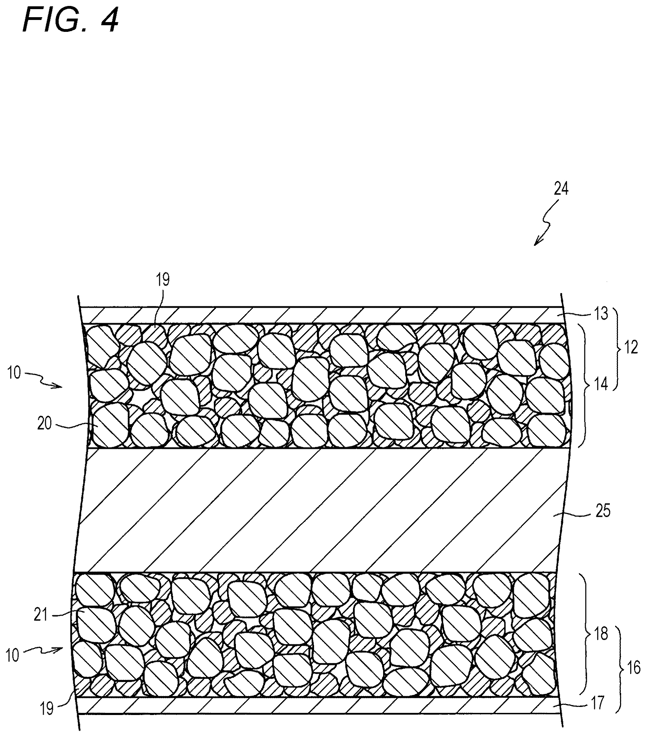

With reference to FIG. 4, a second embodiment will be described. In the first embodiment, a case of a primary battery of a second battery having solid power generating elements including the assembly composite 10 has been described. In the second embodiment, there will be described a case of a liquid-type lithium ion battery employing an electrolyte containing an organic solvent and the assembly composite 10. In the second embodiment, the same members as described in the first embodiment are denoted by the same reference numerals, and further descriptions thereof will be omitted. FIG. 4 is a cross-section of a power storage device 24 of the second embodiment.

The power storage device 24 includes the positive electrode layer 12, a separator 25, and the negative electrode layer 16 in that order. These elements are built in a case (not illustrated). The separator 25 is resistive to the active materials 20 and 21 contained in the positive electrode layer 12 and the negative electrode layer 16, and to an electrolytic solution and is formed of a porous body which allows passage of lithium ions but has no electron conductivity. Examples of the separator 25 include non-woven fabric or porous film formed of cellulose, polypropylene, polyethylene, polyamide, alumina etc. Since the electrolytic solution employed in the second embodiment is the same as described in the first embodiment, overlapping description will be omitted.

The power storage device 24 of the second embodiment has the positive electrode layer 12 and the negative electrode layer 16 each containing the assembly composite 10. Thus, similar to the power storage device 11 of the first embodiment, dendritic growth can be suppressed.

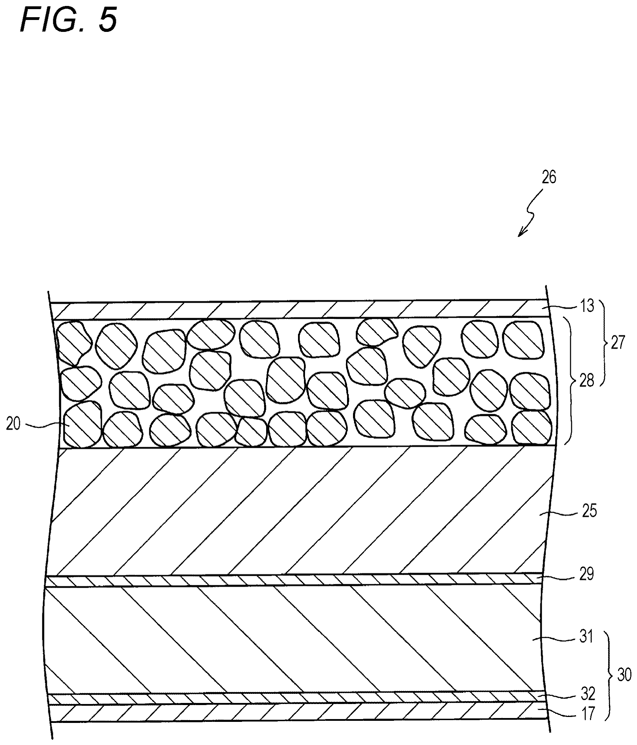

With reference to FIG. 5, a third embodiment will be described. In the first and second embodiments, there has been described a case in which the positive electrode layer 12, the electrolyte layer 15, and the negative electrode layer 16 include the assembly composite 10. The third embodiment corresponds to a case in which protective layers 29 and 32 contain the assembly composite 10. In the third embodiment, the same members as described in the first and second embodiments are denoted by the same reference numerals, and further descriptions thereof will be omitted. FIG. 5 is a cross-section of a power storage device 26 of the third embodiment.

The power storage device 26 includes a positive electrode layer 27, the separator 25, and the negative electrode layer 30 in that order. These elements are built in a case (not illustrated). The power storage device 26 is a liquid-type lithium ion battery employing an electrolyte containing an organic solvent.

The positive electrode layer 27 is formed of the current-collecting layer 13 stacked on an active material layer 28. The active material layer 28 contains an active material 20. In order to lower the resistance of the active material layer 28, the active material layer 28 may contain a conducting aid such as carbon black, acetylene black, Ketjen black, carbon fiber, Ni, Pt, and Ag.

Between the separator 25 and the negative electrode layer 30, the protective layer 29 is disposed. The protective layer 29 contains the assembly composite 10.

The negative electrode layer 30 is formed of an active material layer 31, the protective layer 32, and the current-collecting layer 17 stacked in that order. The active material layer 31 is formed of a material, for example, Li, Li-Al alloy, Li-Sn alloy, Li-Si alloy, Li-Mg alloy, Li-Si alloy, or Si-Li alloy. The protective layer 32 contains the assembly composite 10. The protective layers 29 and 32 are disposed by sheet stacking with a slurry including the assembly composite 10, application of a slurry including the assembly composite to the separator 25 or the current-collecting layer 17, or a similar technique.

The oxide grains 19, which are contained in the assembly composite 10 and have a garnet-type crystal structure including Li, La, and Zr, have resistance to reduction by metallic lithium present in the active material layer 31. As a result, stability in operation of the power storage device 26 further increases. In addition, the protective layer 29 intervening between the active material layer 31 and the separator 25 suppresses short circuit, which would otherwise be caused by dendritic growth of metallic lithium. The protective layer 32 intervening between the active material layer 31 and the current-collecting layer 17 suppresses degradation of the current-collecting layer 17.

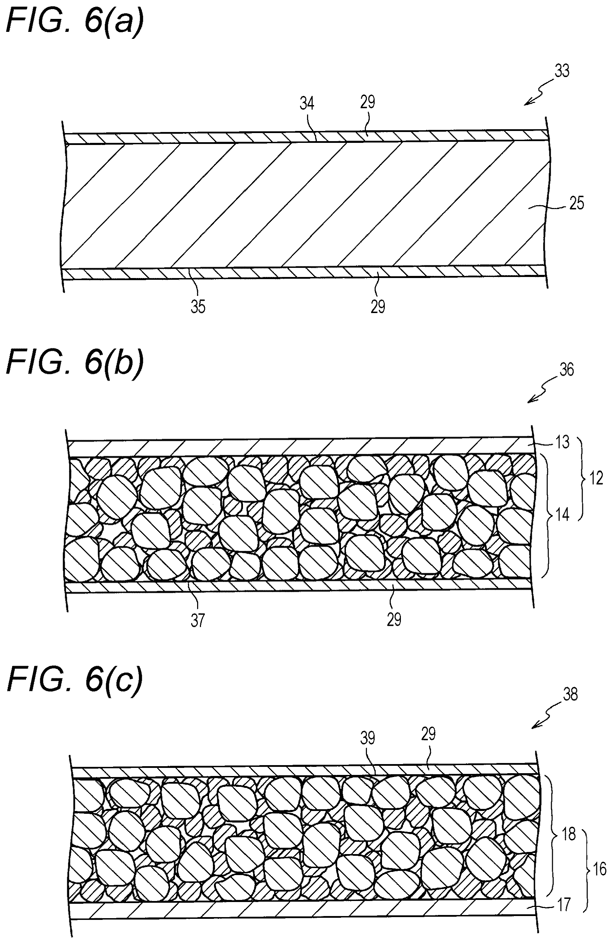

With reference to FIG. 6, a fourth embodiment to a sixth embodiment will be described. The same members as described in the first to third embodiments are denoted by the same reference numerals, and further descriptions thereof will be omitted. FIG. 6(a) is a cross-section of an insulator of a fourth embodiment.

The insulator 33 includes a separator 25 and a protective layer 29 which is in contact with the separator 25. The separator 25 includes a first interface 34 and a second interface 35 on an opposite side of the first interface 34, and a protective layer 29 is disposed at the first interface 34 and the second interface 35. The protective layer 29 disposed at the separator 25 can suppress short circuit caused by dendritic growth of metallic lithium included in the power storage device. Even if the short circuit occurs in the power storage device and causing the separator 25 to undergo thermal deformation, the presence of the protective layer 29 ensures the shape of Separator 25 is maintained, thereby suppressing the occurrence of thermal runaway in the power storage device.

FIG. 6(b) is a cross-section of an electrode of a fifth embodiment. The electrode 36 is equipped with a positive electrode layer 12 and a protective layer 29 that is in contact with the active material layer 14 of the positive electrode layer 12. The protective layer 29 is positioned on the interface 37 opposite to the surface where the current collecting layer 13 of the active material layer 14 is arranged. The protective layer 29, which is placed on the interface 37 of the active material layer 14, can reduce dendrite growth from the negative electrode layer 16 of the power storage device.

FIG. 6(c) is a cross-section of an electrode 38 of a sixth embodiment. The electrode 38 is equipped with a negative electrode layer 16 and a protective layer 29 that is in contact with the active material layer 18 of the negative electrode layer 16. The electrode 38 has protective layer 29 arranged on the interface 39, which is opposite to the surface where the current-collecting layer 17 of the active material layer 18 is located. The protective layer 29, which is placed on the interface 39 of the active material layer 18, can reduce dendrite growth from the negative electrode layer 16 of the power storage device.

The insulator 33 is placed in the power storage device as an alternative to the separator 25 of the power storage device 24 in the second embodiment or the power storage device 26 in the third embodiment. In insulator 33, one of the two protective layers 29 arranged on the interfaces 34 and 35 of the separator 25 may be omitted.

The electrode 36 is positioned in the power storage device as an alternative to the positive electrode layers 12, 27 of the power storage device 24 in the second embodiment or the power storage device 26 in the third embodiment. The electrode 38 is positioned in the power storage device as an alternative to the negative electrode layers 16, 30 of the power storage device 24 in the second embodiment or the power storage device 26 in the third embodiment.

EXAMPLES

The present invention will next be described in detail by way of examples, which should not be construed as limiting the invention thereto.

(Preparation of first oxide grains)

$Li_2CO_3$, MgO, $La(OH)_3$, $SrCO_3$, and $ZrO_2$ were weighed so as to establish a formula: $Li_{6.95}Mg_{0.15}La_{2.75}Sr_{0.25}Zr_{2.0}O_{12}$. The amount of $Li_2CO_3$ was adjusted to an about 15 mol%-excess (as reduced to elemental Li), in consideration of sublimation of Li during firing. The thus-weighed raw materials, an organic solvent, and zirconia balls were fed to a nyoln-made pot, and the mixture was pulverized and mixed by means of a ball mill for 15 hours. The resultant slurry was removed from the pot and dried. The dry product was calcined on an MgO plate at 900°C for 1 hour and 1,200°C for 10 hours. The powder obtained through calcination was placed on an MgO plate and fired at 1,100°C for 4 hours in an inert gas atmosphere. The powder obtained through firing was wet-pulverized by means of a planetary ball mill under non-air-exposed condition, and then dried, to thereby yield first oxide grains. The median diameter of the first oxide grains, as determined through grain size distribution measurement based on the laser diffraction/scattering method, was 3.2 $\mu$m.

(Preparation of second oxide grains)

$Li_2CO_3$, MgO, $La(OH)_3$, $SrCO_3$, and $ZrO_2$ were weighed so as to establish a formula:$Li_{6.65}La_3Zr_{1.65}Ta_{0.35}O_{12}$. The amount of $Li_2CO_3$ was adjusted to an about 15 mol%-excess (as reduced to elemental Li), in consideration of sublimation of Li during firing. The thus-weighed raw materials, an organic solvent, and zirconia balls were fed to a nyoln-made pot, and the mixture was pulverized and mixed by means of a ball mill for 15 hours. The resultant slurry was removed from the pot and dried. The dry product was calcined on an $Al_2O_3$ plate at 900°C for 1 hour and 1,200°C for 10 hours. The powder obtained through calcination was placed on an $Al_2O_3$ plate and fired at 1,100°C for 4 hours in an inert gas atmosphere. The powder obtained through firing was wet-pulverized by means of a planetary ball mill under non-air-exposed condition, and then dried, to thereby yield second oxide grains. The median diameter of the second oxide grains, as determined through grain size distribution measurement based on the laser diffraction/scattering method, was 3.1 $\mu$m.

(Preparation of electrolytic solution)

A lithium salt, $LiN(SO_2F)_2$(LiFSI), was dissolved in an ion liquid, N-methyl-N-propylpyrrolidinium bis(fluorosulfonyl)imide (P13FSI), to thereby prepare an electrolytic solution having a salt concentration of 2.1 mol/dm$^3$.

(Example 1)

The first oxide grains were mixed with inorganic grains (MgO), to thereby prepare a powder mixture (ratio of inorganic grains to oxide grains: 3 vol%). The electrolytic solution was added to the powder mixture so that the volume ratio (powder mixture : electrolytic solution) was adjusted to 61:39 (vol%), and the mixture was further mixed by means of a mortar, to thereby yield an assembly composite of Example 1. The median diameter of the inorganic grains, as determined through grain size distribution measurement based on the laser diffraction/scattering method, was 0.54 μm.

(Example 2)

The electrolytic solution was added to the first oxide grains so that the volume ratio (oxide grains : electrolytic solution) was adjusted to 61:39 (vol%), and mixing was conducted by means of a mortar, to thereby yield an assembly composite of Example 2. By analyzing the first oxide grains through SEM-EDS and time of flight secondary ion mass spectrometry (TOF-SIMS), inorganic grains composed of Li-Mg-O were detected on the surfaces of the oxide grains. The inorganic grains were assumed to be formed during preparation of the first oxide grains.

(Example 3)

The second oxide grains were mixed with inorganic grains (MgO), to thereby prepare a powder mixture (ratio of inorganic grains to oxide grains: 3 vol%). The electrolytic solution was added to the powder mixture so that the volume ratio (powder mixture : electrolytic solution) was adjusted to 61:39 (vol%), and the mixture was further mixed by means of a mortar, to thereby yield an assembly composite of Example 3. The median diameter of the inorganic grains, as determined through grain size distribution measurement based on the laser diffraction/scattering method, was 0.54 μm.

(Example 4)

Apart from setting the median diameter of the inorganic particles to 1.0 μm, an assembly composite of Example 4 was obtained in the same manner as in Example 1.

(Example 5)

Apart from setting the median diameter of the inorganic particles to 1.5 μm, an assembly composite of Example 5 was obtained in the same manner as in Example 1.

(Example 6)

Apart from setting the ratio of the inorganic particles MgO to the first oxide particles to 1vol%, an assembly composite of Example 6 was obtained in the same manner as in Example 1.

(Example 7)

Apart from setting the ratio of the inorganic particles MgO to the first oxide particles to 5vol%, an assembly composite of Example 7 was obtained in the same manner as in Example 1.

(Example 8)

Apart from setting the ratio of the inorganic particles MgO to the first oxide particles to 10vol%, an assembly composite for Example 8 was obtained in the same manner as in Example 1.

(Comparative Example 1)

The electrolytic solution was added to the second oxide grains, so that the volume ratio (oxide grains : electrolytic solution) was adjusted to 61:39 (vol%), and the mixture was further mixed by means of a mortar, to thereby yield an assembly composite of Comparative Example 1.

(Comparative Example 2)

The procedure of Example 1 was repeated, except that the volume ratio of the inorganic grains (MgO) to the first oxide grains was adjusted to 15 vol%, to thereby yield an assembly composite of Comparative Example 2.

(Comparative Example 3)

The procedure of Example 1 was repeated, except that the median diameter of the inorganic grains was tuned to 3.0μm, to thereby yield an assembly composite of Comparative Example 3.

(Fabrication of symmetric cell)

In an Ar atmosphere, each of the assembly composites of Examples 1 to 8 and Comparative Examples 1 to 8 was put into a cylindrical insulating member (inner diameter: 10 mm) and monoaxially pressed (pressure: 360 MPa), to thereby yield compacts of Examples 1 to 3 and Comparative Examples 1 to 3. Metallic Li foil (diameter: 10 mm) was closely bound to each surface of the respective compacts, to thereby form symmetric cells of Examples 1 to 8 and Comparative Examples 1 to 3.

(Test method)

A specific DC current of was caused to flow between two metal foils attached to the corresponding surfaces of each of the symmetric cells of Examples 1 to 8 and Comparative Examples 1 to 3 over 500 seconds. In the course of current flowing, when no short circuit was observed, another DC current having an elevated current density was caused to flow. The same operation was repeated until short circuit occurred. The current density at the occurrence of short circuit was measured. The current density employed was a value obtained by dividing an average current at the occurrence of short circuit by the area of the metal foil.

(Results)

Table 1 is an itemized list of median diameter of oxide grains, ratio of inorganic grains to oxide grains, median diameter of inorganic grains, and current density at occurrence of short circuit, in the Examples and Comparative Examples.

[Table 1]

|  | Oxide grains | | Inorganic grains | | Current density (mA/cm$^2$) |
|---|---|---|---|---|---|
|  | Type | Median diameter (μm) | Ratio (vol%) | Median diameter (μm) |  |
| Ex. 1 | 1st | 3.2 | 3 | 0.54 | 2.0 |
| Ex. 2 | 1st | 3.2 | - | - | 2.0 |
| Ex. 3 | 2nd | 3.1 | 3 | 0.54 | 2.0 |
| Ex. 4 | 1st | 3.2 | 3 | 1.0 | 2.0 |
| Ex. 5 | 1st | 3.2 | 3 | 1.5 | 2.0 |
| Ex. 6 | 1st | 3.2 | 1 | 0.54 | 2.0 |
| Ex. 7 | 1st | 3.2 | 5 | 0.54 | 2.0 |
| Ex. 8 | 1st | 3.2 | 10 | 0.54 | 2.0 |
| Comp. Ex. 1 | 2nd | 3.1 | 0 | - | 0.5 |
| Comp. Ex. 2 | 1st | 3.2 | 15 | 0.54 | 0.1 |
| Comp. Ex. 3 | 1st | 3.2 | 3 | 3.0 | 0.5 |

In Examples 1 to 8, the symmetric cell exhibited a current density at the occurrence of short circuit of 2.0 mA/cm$^2$, while in Comparative Example 1, the symmetric cell exhibited a current density at the occurrence of short circuit of 0.5 mA/cm$^2$. The assembly composites of Examples 1 to 8, in which the inorganic grains were present in the intergranular space of the oxide grains, were found to successfully provide a more enhanced current density at the occurrence of short circuit, as compared with the assembly composite of Comparative Example 1 including no such inorganic grains. Thus, the assembly composites of Examples 1 to 8, in which the inorganic grains were present in the intergranular space of the oxide grains, were found to successfully suppress dendritic growth of metallic Li.

The assembly composite of Example 2 was not prepared by mixing the oxide grains with the inorganic grains. However, similar to the assembly composites of Examples 1 and 3 to 8, in which the oxide grains were mixed with inorganic grains, a more enhanced current density at the occurrence of short circuit was found to be successfully achieved. Thus, an assembly composite in which the inorganic grains were formed in preparation of the oxide grains was found to successfully suppress dendritic growth of metallic Li, similar to the assembly composite in which the oxide grains were mixed with inorganic grains.

Although the symmetric cell of Comparative Example 2 included an assembly composite in which the inorganic grains were present in the intergranular space of the oxide grains, the current density at the occurrence of short circuit was 0.1 mA/cm$^2$. In comparison of Examples 1 to 8 with Comparative Example 2, Comparative Example 2 differed from Examples 1 to 8 in that the volume ratio of the inorganic grains to the oxide grains was as high as 15 vol%. Conceivably, a considerable intergranular space was present among the oxide grains 19 in Comparative Example 2, whereby dendrites were grown at the grain boundary of the oxide grains 19, causing short circuit.

Also, although the symmetric cell of Comparative Example 3 included an assembly composite in which the inorganic grains were present in the intergranular space of the oxide grains, the current density at the occurrence of short circuit was 0.5 mA/cm$^2$. In comparison of Examples 1 to 8 with Comparative Example 3, the median diameter of the inorganic grains in the Comparative Example 3 was 3.0 $\mu$m and is greater than that of the Example 1. Conceivably, a considerable intergranular space was also present among the oxide grains 19 in Comparative Example 3, whereby dendrites were grown at the grain boundary of the oxide grains 19, causing short circuit.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above embodiments, the power storage device 11 has the positive electrode layer 12 in which the active material layer 14 is provided on one surface of the current-collecting layer 13, and the negative electrode layer 16 in which the active material layer 18 is provided on one surface of the current-collecting layer 17. However, the present invention is not necessarily limited thereto. It should be apparent for those skilled in the art that the elements of the above embodiments can be applied to, for example, a power storage device which includes an electrode layer having the current-collecting layer 13 provided with the active material layer 14 and the active material layer 18 on each surface (i.e., a so-called bipolar electrode). By alternatingly stacking the bipolar electrode and the electrolyte layer 15, and inserting the stacked product into a case (not illustrated), a so-called power storage device of a bipolar structure can be obtained.

The first embodiment corresponds to the case in which each of the active material layers 14 and 18 and the electrolyte layer 15 contains the assembly composite 10. However, the present invention is not necessarily limited thereto. In the power storage device 11, at least one member of the active material layers 14 and 18 and the electrolyte layer 15 essentially contains the assembly composite 10.

The second embodiment corresponds to the case in which each of the active material layers 14 and 18 contains the assembly composite 10. However, the present invention is not necessarily limited thereto. In the power storage device 24, at least one member of the active material layers 14 and 18 essentially contains the assembly composite 10.

The third embodiment corresponds to the case in which the protective layer 29 is disposed between the active material layer 31 and the separator 25, and the protective layer 32 is disposed between the current-collecting layer 17 and the active material layer 31. However, the present invention is not necessarily limited thereto. Needless to say, either of the protective layers 29 and 32 may be omitted.

The above embodiments correspond to the case in which the assembly composite 10 contains the electrolytic solution 23. However, the present invention is not necessarily limited thereto. Needless to say, the electrolytic solution 23 may be omitted.

In the above embodiments, manufacturing of the active material layers 14 and 18, the electrolyte layer 15, and the protective layers 29 and 32 (sheet) by use of the assembly composite 10 has been described. However, the invention is not necessarily limited thereto. The assembly composite 10 is defined as an assembly formed of a number of substance elements, and encompasses all such assemblies, so long as the entirety of each assembly composite is a unit target of trading. Another embodiment of the assembly composite 10 includes a mixture of the oxide grains 19 and the inorganic grains 22; a mixture of the oxide grains 19 and the inorganic grains 22 which mixture is compounded with the electrolytic solution 23; and a press-formed compact of the mixture of the oxide grains 19 and the inorganic grains 22.

In the above embodiments, the power storage devices 11,24, and 26 each including the assembly composite 10 have been described, taking a lithium ion battery as an example. However, the invention is not necessarily limited thereto. Examples of another power storage device including the assembly composite 10 include a lithium ion capacitor, a lithium-sulfur battery, a lithium-oxygen battery, and a lithium-air battery.

REFERENCE SIGNS LIST

10: assembly composite

11, 24, 26: power storage device
12: positive electrode layer (sheet, electrode)
15: electrolyte layer (sheet, separator)
16, 30: negative electrode layer (sheet, electrode)
19: oxide grains
22: inorganic grains
23: electrolytic solution
25: separator
29, 32: protective layer
36, 38: electrode

**Claims**

1. An assembly composite which contains oxide grains having a garnet-type crystal structure containing Li, La, and Zr, wherein

   the assembly composite further contains inorganic grains composed of a main-group element including Mg;
   the inorganic grains have a median diameter 1/2 or less that of the oxide grains; and
   a volume ratio of the inorganic grains to the oxide grains is 1 vol% or more and 10 vol% or less.

2. The assembly composite according to claim 1,
   which further contains an electrolytic solution.

3. A sheet comprising the assembly composite as recited in claim 1 or 2.

4. An electrode comprising the assembly composite as recited in claim 1 or 2.

5. A separator comprising the assembly composite as recited in claim 1 or 2.

6. An electrode which is in contact with a protective layer including the assembly composite as recited in claim 1 or 2.

7. A separator which is in contact with a protective layer including the assembly composite as recited in claim 1 or 2.

8. A power storage device including the electrode as recited in claim 4.

9. A power storage device including the separator as recited in claim 5.

10. A power storage device including the electrode as recited in claim 6.

11. A power storage device including the separator as recited in claim 7.

FIG. 1

## FIG. 2

## FIG. 3

FIG. 4

FIG. 5

## FIG. 6(a)

## FIG. 6(b)

## FIG. 6(c)

## INTERNATIONAL SEARCH REPORT

| International application No. |
| --- |
| **PCT/JP2023/042637** |

### A. CLASSIFICATION OF SUBJECT MATTER

*H01M 10/056*(2010.01)i; *C01G 25/02*(2006.01)i; *C01G 35/00*(2006.01)i; *H01B 1/06*(2006.01)i; *H01B 1/08*(2006.01)i; *H01M 4/13*(2010.01)i; *H01M 4/66*(2006.01)i; *H01M 10/052*(2010.01)i; *H01M 50/434*(2021.01)i; *H01M 50/443*(2021.01)i; *H01M 50/451*(2021.01)i

FI: H01M10/056; C01G25/02; C01G35/00 C; H01B1/06 A; H01B1/08; H01M4/13; H01M4/66 A; H01M10/052; H01M50/434; H01M50/443 M; H01M50/451

According to International Patent Classification (IPC) or to both national classification and IPC

### B. FIELDS SEARCHED

Minimum documentation searched (classification system followed by classification symbols)

H01M10/056; C01G25/02; C01G35/00; H01B1/06; H01B1/08; H01M4/13; H01M4/66; H01M10/052; H01M50/434; H01M50/443; H01M50/451

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2018-160445 A (KABUSHIKI KAISHA TOSHIBA) 11 October 2018 (2018-10-11) | 1-11 |
| A | JP 2020-522854 A (THE REGENTS OF THE UNIVERSITY OF MICHIGAN) 30 July 2020 (2020-07-30) | 1-11 |
| A | JP 2020-516579 A (CORNING INC.) 11 June 2020 (2020-06-11) | 1-11 |
| A | WO 2021/085488 A1 (FUJIFILM CORPORATION) 06 May 2021 (2021-05-06) | 1-11 |

☑ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 February 2024** | **20 February 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT

International application No.

**PCT/JP2023/042637**

**C.    DOCUMENTS CONSIDERED TO BE RELEVANT**

| Category* | Citation of document, with indication, where appropriate, of the relevant passages | Relevant to claim No. |
|---|---|---|
| A | WO 2005/112180 A1 (MATSUSHITA ELECTRIC INDUSTRIAL CO., LTD.) 24 November 2005 (2005-11-24) | 1-11 |

**INTERNATIONAL SEARCH REPORT**
Information on patent family members

| International application No. |
| --- |
| **PCT/JP2023/042637** |

| Patent document cited in search report | | | Publication date (day/month/year) | Patent family member(s) | | | Publication date (day/month/year) |
| --- | --- | --- | --- | --- | --- | --- | --- |
| JP | 2018-160445 | A | 11 October 2018 | US | 2018/0277909 | A1 | |
| | | | | EP | 3379604 | A1 | |
| | | | | CN | 108630981 | A | |
| | | | | KR | 2013/0068339 | A | |
| JP | 2020-522854 | A | 30 July 2020 | US | 2019/0006707 | A1 | |
| | | | | WO | 2018/226826 | A1 | |
| | | | | KR | 10-2020-0014890 | A | |
| | | | | CN | 110998923 | A | |
| JP | 2020-516579 | A | 11 June 2020 | US | 2022/0359908 | A1 | |
| | | | | US | 2018/0301754 | A1 | |
| | | | | WO | 2018/195011 | A1 | |
| | | | | CN | 108727025 | A | |
| | | | | KR | 10-2019-0137153 | A | |
| WO | 2021/085488 | A1 | 06 May 2021 | JP | 2023-116686 | A | |
| | | | | US | 2022/0209292 | A1 | |
| | | | | CN | 114514645 | A | |
| WO | 2005/112180 | A1 | 24 November 2005 | US | 2008/0274411 | A1 | |
| | | | | KR | 10-2007-0011443 | A | |
| | | | | CN | 1950968 | A | |

Form PCT/ISA/210 (patent family annex) (July 2022)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016040767 A